Europäisches Patentamt

**European Patent Office** (11) Publication number: **0 073 431**
**A1**

Office européen des brevets

(12) **EUROPEAN PATENT APPLICATION**

(21) Application number: **82107628.8**

(22) Date of filing: **20.08.82**

(51) Int. Cl.³: **B 60 N 3/08**

(30) Priority: **02.09.81 IT 5357381 U**

(71) Applicant: **LEAR S.n.c. di FOGGINI & C., Strada del Bottone, 20, I-10043 Orbassano (Province of Torino) (IT)**

(43) Date of publication of application: **09.03.83 Bulletin 83/10**

(72) Inventor: **Foggini, Giovanni, Corso Matteotti, 23, I-10121 Torino (IT)**

(84) Designated Contracting States: **DE FR GB**

(74) Representative: **Modiano, Guido et al, MODIANO & ASSOCIATI S.A.S. Via Meravigli, 16, I-20123 Milan (IT)**

(54) Flush mount ashtray particularly for passenger cars.

㊌ The ashtray comprises a flat base (10) to which a bowl (12) is articulated having a central compartment (16) delimited by sidewalls (17) on at least one whereof a projecting cam profile (18), having three profile portions (181, 182, 183), is provided, a pawl (19), being carried at the end of an arm (20) rigid with the base (10), and being effective to follow two profile portions (181, 183) of the cam (18) to respectively move into engagement with the third portion (182) as the bowl (12) is tilted to the closed position, and out of engagement with the third portion (182) for opening the bowl (12) as a pressure is applied on the outer wall (14) thereof.

ACTORUM AG

0073431

This invention relates to a flush mount ashtray particularly for passenger cars, and more specifically to an ashtray of a type which comprises a stand, a tilting bowl urged by an elastic means into the open position through a tilting movement of its housing outwards, and a retention means for holding the bowl in the closed position and allow it to be opened by application of a slight pressure on the bowl outer wall.

Ashtrays of the above general type have been known where the bowl locking and releasing are controlled by camming means known per se, in which a generic pawl or engagement member is caused to sequentially and selectively follow two portions of a cam profile or respectively reach a third portion of the profile which corresponds to a stable locking position of the element associated with said means.

However these known ashtrays are structurally complicated, of excessively large size and poor reliability in operation.

Accordingly, the task of this invention is to provide a peculiar combination and configuration of the aforementioned means, which can afford improved functionality and a significantly simplified construction, considerable reduction of space requirements, and improved reliability and convenience of operation.

According to one aspect of the invention the above task is achieved by a flush mount ashtray particularly for passenger cars, of a type comprising a tiltable bowl under the urge of opening springs, bowl retention and release means including a cam with three profile portions in cooperation with a pawl, and wherein the bowl is opened by applying a slight pressure on the front wall thereof, characterized in that it comprises a flat base to which a bowl is articulated having a central compartment delimited by sidewalls on at least one of which walls a projecting cam profile having three profile portions is provided, and in that a pawl is carried at the end of an arm rigidly mortised to the base, whereby the pawl is caused to follow two profile portions of said cam to respectively move into engagement with the third portion of stable retention thereof, as the bowl is tilted to the closed position, and out of engagement with said third portion, for the purpose of opening the bowl, after a pressure has been applied on the outer wall of said bowl.

The invention will be more clearly understood from the detailed description which follows, with reference to the accompanying drawings, where:

Figure 1 is a front elevation view of this ashtray;

Figure 2 is a cross-section view taken along the line II-II of Figure 1 and showing the ashtray in its closed position;

Figure 3 is a sectional view similar to Figure 2 but showing the ashtry in its open position;

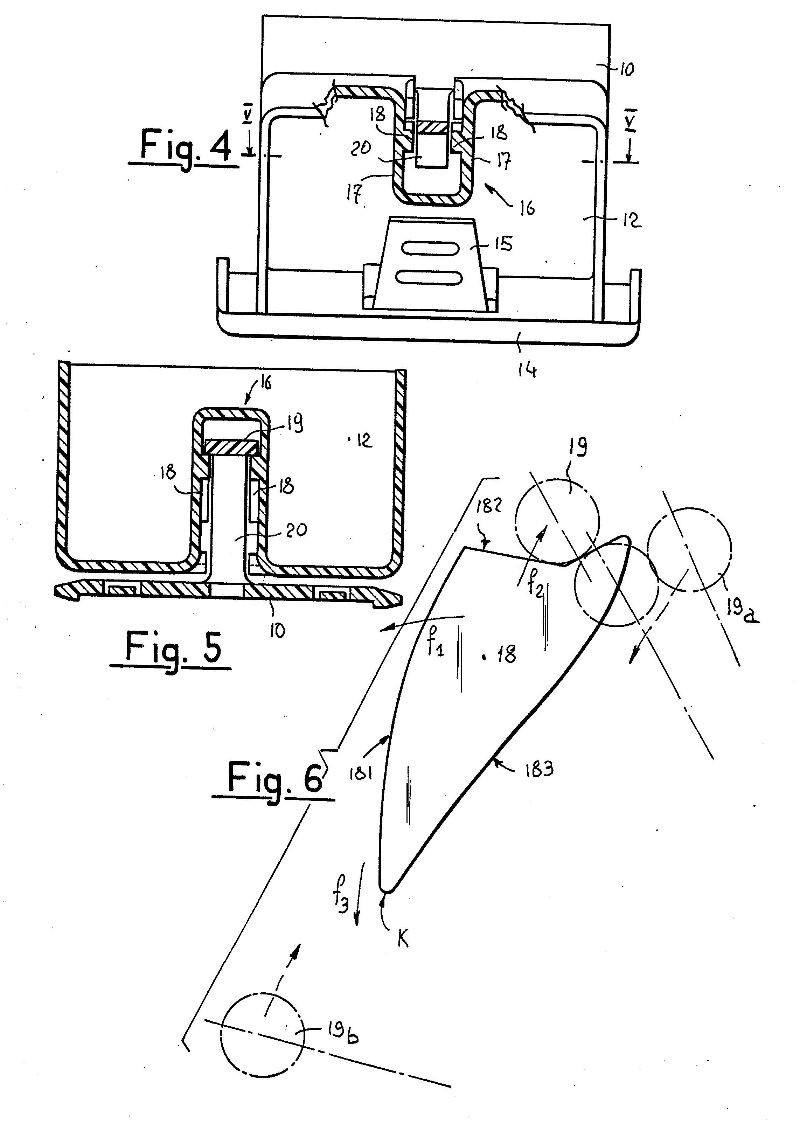

Figure 4 is a partly sectional top view of the instant ashtray;

Figure 5 is a sectional view thereof taken along the line V-V of Figure 4; and

Figure 6 is a diagramatic view on enlarged scale of the detail within the dashed circle VI of Fig. 3 illustrating the relative displacement movements of the cams and pawl included in the ashtray according to the invention.

In the drawings, the reference numeral 10 designates the ashtray base adapted to be flush mounted in respective seat prearranged in the side panel and/or dashboard panel of a passenger car.

To the base 10, there is articulated, through a hinge pin 11, an ash receiving bowl 12, which is biased to the open position by tilting its seat outwards under the action of a coil spring 13. The bowl 12 has a front wall adapted to fit flush with the opening of the bowl seat with the bowl in its closed position, and comprising a snuffer grid 15 and a central compartment indicated at 16. The compartment 16 is delimited, among others, by two side walls 17 carrying each a cam 18 which projects from its related wall; the cams 18 of the two walls have the same configuration. With the profile of each cam, there cooperates a corresponding pawl 19 carried at the free end of an arm 20 having its other end rigidly mortised to the base 10; advantageously, the arm 20 is integral with the base, it also being elastically yielding for a purpose which will be specified hereinafter.

Each cam 18 essentially comprises three profile portions, respectively 181-182-183 (Figure 6). The portion 181 is followed by the pawl while moving into engagement with the third portion 182 of stable retention as the bowl 12 is tilted to the closed position. The portion 183 is followed by the pawl to move out of the stable retention portion and allow the bowl to be opened, after the pawl has been disengaged from said third portion 182, thanks to the application of a slight pressure on the front wall 14 to pivot the bowl into its seat.

Figure 6 illustrates sequentially the relative positions of the cam and pawl through the various positions of the bowl.

Starting from the closed position where the pawl engages the stable retention portion 182, it may be seen that by pushing on the wall 11 of the bowl, the cam 18 is pivoted in the direction $f_1$ until the pawl moves into the position $19_a$ outside the portion 182 with respect to the cam. Upon releasing the bowl, the cam 18 will pivot upwards in the direction of the arrow $f_2$ and the pawl will move out of the portion 182 to follow the profile portion 183 and occupy the position indicated at $19_b$ which corresponds to the fully open position of the bowl. By tilting the bowl into the closed position, the cam 18 is caused to move down in the direction of the arrow $f_3$ and the pawl, thanks to the slightly offset configuration of the lower cusp $\underline{K}$ of the cam, will engage and follow the portion 181 thereof until by virtue of the elasticity of the arm 20, it snap engages with the stable retention portion 182.

- 6 -

0073431

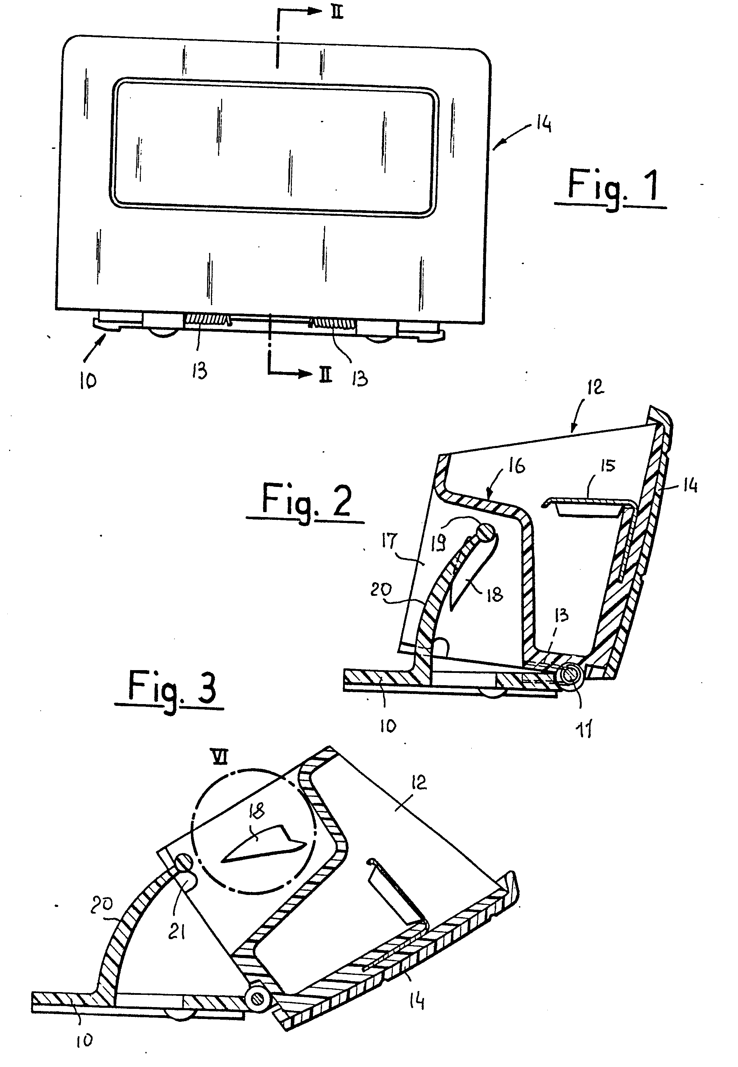

With the bowl in the fully open position (Figure 3), the pawl 19 will engage with a bowl stop 21, wherefrom it can be disengaged by elastically deforming the arm 20 to empty the bowl itself.

Of course, the effects of this invention also extend to other embodiments thereof which can provide an equal degree of usefulness on the basis of the same inventive concept.

## CLAIMS

1. A Flush mount ashtray particularly for passenger cars, of a type comprising a tiltable bowl under the urge of opening springs, bowl retention and release means including a cam with three profile portions in cooperation with a pawl, and wherein the bowl is opened by applying a slight pressure on the front wall thereof, characterized in that it comprises a flat base (10) to which a bowl (12) is articulated having a central compartment (16) delimited by sidewalls (17) on at least one of which walls a projecting cam profile (18) having three profile portions (181, 182, 183) is provided, and in that a pawl (19) is carried at the end of an arm (20) rigidly mortised to the base (10), whereby the pawl (19) is caused to follow two profile portions of said cam (18) to respectively move into engagement with the third portion (182) of stable retention thereof, as the bowl (12) is tilted to the closed position, and out of engagement with said third portion (182), for the purpose of opening the bowl (12), after a pressure has been applied on the outer wall (14) of the said bowl (12).

2. An ashtray according to Claim 1, wherein the pawl (19) carrying arm (20) is elastically yielding and formed integral with the base (10).

3. An ashtray according to the preceding claims, characterized in that it comprises two identical cams (18) arranged to face each other and being carried on corresponding facing walls delimiting the bowl (12)

0073431

compartment.

4. An ashtray according to the preceding claims, characterized in that the bowl (12) is provided with a stop (21) effective to engage the pawl (19) with the bowl (12) in the fully tilted position thereof, and in that said stop (21) and pawl (19) can be disengaged, owing to the pawl carrying arm (20) being elastically deformable, to allow the bowl (12) to be turned over for emptying purposes.

5. A flush mount ashtray particularly for passenger cars, according to the preceding claims and substantially as herein described and illustrated.

0073431

## Fig. 1

## Fig. 2

## Fig. 3

Fig. 4

Fig. 5

Fig. 6

00**73431**

# EUROPEAN SEARCH REPORT

Application number

EP 82 10 7628.8

## DOCUMENTS CONSIDERED TO BE RELEVANT

| Category | Citation of document with indication, where appropriate, of relevant passages | Relevant to claim |
|---|---|---|
| P,X | DE – U1 – 8 132 467 (SIDIER) <br> * fig. 2, 3 * <br> -- | 1 |
| A | US – A – 2 791 346 (W.J. TELL) <br> -- | |
| A | US – A – 3 737 208 (J.H. HARING) <br> ---- | |

**CLASSIFICATION OF THE APPLICATION (Int. Cl. 3)**

B 60 N 3/08

**TECHNICAL FIELDS SEARCHED (Int.Cl. 3)**

A 24 F 19/00

B 60 N 3/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 28–10–1982 | BECKER |

EPO Form 1503.1   06.78